# EUROPÄISCHE PATENTSCHRIFT

(11) **EP 1 256 943 B1**
(45) Veröffentlichungstag und Bekanntmachung des Hinweises auf die Patenterteilung: **25.07.2007**
(21) Anmeldenummer: 02009911.5
(22) Anmeldetag: 03.05.2002
(51) Int. Cl.: G11B 7/09

(54) **Verfahren und Vorrichtung für optische Datenerfassung**
Method and apparatus for optical data acquisition
Procédé et appareil d'acquisition de données optiques

(30) Priorität: 10.05.2001 DE 10122601
(43) Veröffentlichungstag der Anmeldung: 13.11.2002
(73) Patentinhaber: Grundig Multimedia B.V., 1083HJ Amsterdam (NL)
(72) Erfinder: Schulz, Donald, Dr., 65843 Sulzbach (DE)
(74) Vertreter: Pröll, Jürgen

(56) Entgegenhaltungen:
- US-A- 4 614 863
- US-A- 5 245 599
- US-A- 5 299 075
- PATENT ABSTRACTS OF JAPAN Bd. 010, Nr. 202 (P-477), 15. Juli 1986 (1986-07-15) -& JP 61 042744 A (TOSHIBA CORP), 1. März 1986 (1986-03-01)
- PATENT ABSTRACTS OF JAPAN Bd. 1997, Nr. 11, 28. November 1997 (1997-11-28) -& JP 09 190633 A (NIPPON COLUMBIA CO LTD), 22. Juli 1997 (1997-07-22)
- PATENT ABSTRACTS OF JAPAN Bd. 018, Nr. 293 (P-1747), 3. Juni 1994 (1994-06-03) -& JP 06 052563 A (MITSUBISHI ELECTRIC CORP), 25. Februar 1994 (1994-02-25)

## Beschreibung

Die vorliegende Erfindung betrifft eine Vorrichtung für optische Datenerfassung von optischen Speichermedien durch Aufzeichnung und/oder Wiedergabe von Daten.

Vorrichtungen für optische Speichermedien, wie CD- und DVD-Laufwerke, werden zur Aufzeichnung und/oder Wiedergabe beliebiger Arten von Daten verwendet. Sie werden nachfolgend als CD-Laufwerke bezeichnet. Die Aufzeichnung und Wiedergabe, bzw. die optische Datenerfassung, erfolgt mittels Laser, welche dazu verwendet werden, die Daten in Spuren auf den optischen Speichermedien aufzuzeichnen und/oder wiederzugeben. Die CD-Laufwerke weisen Regler mit fest vorgegebener Regelcharakteristik auf, um den Laser so zu positionieren, dass der vom Laser erzeugte Laserstrahl die jeweils gewünschte Spur für die Aufzeichnung oder Wiedergabe exakt trifft. Zur Feststellung von Positionierungsfehlern wird eine Anordnung von Photodioden genutzt, die um den verwendeten Laser herum angeordnet sind und häufig als Quadratendetektor bezeichnet werden. Der vom Laser erzeugte und auf das optische Speichermedium bzw. die gewünschte Spur gerichtete Lichtstahl wird vom optischen Speichermedium bzw. der gewünschten Spur reflektiert und von den Photodioden in elektrische Ströme gewandelt. Das Verhältnis der Ströme der einzelnen Photodioden zueinander lässt eine Aussage über die relative Position des Lasers zu. Das Verhältnis der Ströme wird ausgewertet und als Eingangssignal für den Regler verwendet.

Umwelteinflüsse, die auf das CD-Laufwerk einwirken, können jedoch eine Vielzahl von Störungen verursachen, die eine präzise Regelung der vom Laser abgetasteten Spur unmöglich machen.

Bei Systemen aus CD-Laufwerk und Lautsprechern, die der Wiedergabe von Tonsignalen dienen, wird das über die Lautsprecher ausgegebene Signal auf das CD-Laufwerk akustisch oder mechanisch zurückgekoppelt. Besonders bei in einem gemeinsamen Gehäuse eingebautem CD-Laufwerk mit Lautsprechern werden durch diese Rückkoppelungen die Abspieleigenschaften verschlechtert.

Wird das CD-Laufwerk in einem Fahrzeug verwendet, z. B. als Bestandteil einer Car-Audio-Anlage, können auftretenden Vibrationen oder Erschütterungen zu Aussetzern führen, die durch Fehlpositionierungen des Lasers entstehen.

Weitere Probleme ergeben sich aus Fertigungstoleranzen für die verwendeten optischen Speichermedien. Da die CDs nie exakt rund laufen, ergeben sich bei der Abtastung der Spuren permanent Abweichungen des Lasers.

Aus US 5,245,599 ist ein Verfahren für optische Datenerfassung von optischen Speichermedien durch Aufzeichnung und/oder Wiedergabe von Daten bekannt. Hierbei wird zur Aufzeichnung und/oder Wiedergabe von Daten ein Lichtstrahl entlang von Spuren des optischen Speichermediums geführt und das Speichermedium abgetastet. Es werden Ereignisse erfasst, welche geeignet sind, den Lichtstrahl vom Verlauf der abzutastenden Spur abzulenken. Als derartige Ereignisse sind externe Ereignisse angegeben beispielsweise durch Erschütterung oder Stöße an das Gerät selbst.

Aus Patent Abstracts of Japan Bd. 101, Nr. 202 (P-477), 15. Juli 1986 (1986-07-15) - & JP 61 042744 A (Toshiba Corp), 1, März 1986 (1986-03-01) ist ein Servo-System für Laufwerke zur Wiedergabe von Musik bekannt, wobei die über Lautsprecher wiederzugebenden Daten, welche von dem Aufzeichnungsmedium stammen, auf den Servo rückgekoppelt werden und damit die Einwirkung der wiederzugebenden Daten, welche akustisch rückgekoppelt sind, kompensiert werden.

Aus US 5,299,075 ist ein Verfahren und eine Vorrichtung zur Vermeidung von Spurabweichungen durch externe Einwirkungen bekannt. Hierbei wird die Empfindlichkeit des Beschleunigungsaufnehmers, der externe Einwirkungen auf das System erkennt, in Abhängigkeit der zu kompensierenden Stöße geregelt. Das System kalibriert sich während der Wiedergabe der Daten selbst.

Es ist daher Aufgabe der vorliegenden Erfindung eine Vorrichtung für optische Datenerfassung von Speichermedien durch Aufzeichnung und/oder Wiedergabe von Daten anzugeben, welche die Probleme bei der optischen Aufzeichnung und/oder Wiedergabe verringern, die durch Umwelteinflüsse und/oder produktionsbedingte Abweichungen und/oder das Gerät selbst verursacht werden.

Bei der vorliegenden Erfindung wird diese Aufgabe durch die Merkmale des Anspruches 1 gelöst.

Vorteilhafte Weiterbildung der Erfindung sind durch die abhängigen Ansprüche sowie die Beschreibung nebst Figuren erläutert.

Dabei wird davon ausgegangen, daß bei der optischen Datenerfassung von optischen Speichermedien, zur Aufzeichnung und/oder Wiedergabe von Daten, ein Lichtstrahl die optischen Speichermedien entlang von Spuren abtastet, wobei der Lichtstrahl entlang des Verlaufs der abzutastenden Spuren geführt wird. Erfindungsgemäß werden Ereignisse erfaßt, welche geeignet sind den Lichtstrahl vom Verlauf der abzutastenden Spuren abzulenken. Die dadurch zu erwartende Ablenkung des Lichtstrahls vom Verlauf der abzutastenden Spuren wird ermittelt, eine die ermittelte Ablenkung ausgleichende Korrektur bestimmt und die Führung des Lichtstrahls entsprechend der bestimmten Korrektur verändert.

Der Vorteil der Erfindung ist darin zu sehen, daß alle durch äußere Einflüsse oder Toleranzen verursachten Abweichungen des Lichtstrahls von der abzutastenden Spur dadurch ausgeglichen werden können, daß die die Abweichungen verursachenden Einflüsse erfaßt, ausgewertet und entsprechende Korrektursignale daraus abgeleitet werden, welche eine Nachführung des Lichtstrahls derart ermöglichen, daß eine Abweichung von der abzutastenden Spur vermieden wird.

Eine vorteilhafte Ausführungsform ergibt sich, wenn die Ereignisse von den wiederzugebenden Daten, welche Audiosignale beinhalten, verursacht werden, und die zu erwartende Ablenkung des Lichtstrahls sowie die zugehörige Korrektur aus den wiederzugebenden Daten bestimmt werden.

Diese Lösung ermöglicht in einfacher Weise den Ausgleich von Störungen die bei der Wiedergabe von akustischen Signalen entstehen.

Eine weitere vorteilhafte Ausführungsform ergibt sich, wenn die Ereignisse von impulsartigen Erschütterungen verursacht werden, und die zu erwartende Ablenkung des Lichtstrahls sowie die zugehörige Korrektur aus durch die impulsartigen Erschütterungen erzeugten periodischen Ereignissen bestimmt werden.

Auf diese Weise können auch die durch impulsartige Erschütterungen hervorgerufene Störungen, die an sich nicht vorhersagbar sind, kurz nach ihrem Auftreten ausgeglichen werden.

Eine andere vorteilhafte Ausführungsform ergibt sich, wenn die Ereignisse von periodischen Störungen verursacht werden, und die zu erwartende Ablenkung des Lichtstrahls sowie die zugehörige Korrektur aus den periodischen Störungen bestimmt werden.

Diese Lösung erlaubt es beispielsweise in besonders einfacher Weise produktionsbedingte Toleranzen auszugleichen, wie den mangelnden Rundlauf von optischen Speichermedien.

Weitere Vorteile der vorliegenden Erfindung ergeben sich aus den abhängigen Ansprüchen sowie der nachfolgenden Beschreibung einer Ausführungsform einer erfindungsgemäßen Vorrichtung anhand von Figuren.

Es zeigt:
- Fig. 1: ein Prinzipschaltbild einer Ausführungsform einer Vorrichtung für die optische Aufzeichnung und/oder Wiedergabe von Daten,
- Fig. 2: ein Prinzipschaltbild einer ersten Weiterentwicklung eines Reglers der Ausführungsform,
- Fig. 3: ein Prinzipschaltbild einer zweiten Weiterentwicklung eines Regers der Ausführungsform,
- Fig. 4: ein Prinzipschaltbild einer dritten Weiterentwicklung eines Reglers der Ausführungsform,
- Fig. 5: ein Prinzipschaltbild einer vierten Weiterentwicklung eines Reglers der Ausführungsform,
- Fig. 6: ein Prinzipschaltbild einer fünften Weiterentwicklung eines Reglers der Ausführungsform.

Zur Erleichterung des Verständnisses der vorliegenden Erfindung sind in den Figuren nur die Bestandteile der Ausführungsform dargestellt, die im Zusammenhang mit der Erfindung von Bedeutung sind. Gleichartige Bestandteile in den einzelnen Figuren sind mit den selben Bezugszeichen gekennzeichnet.

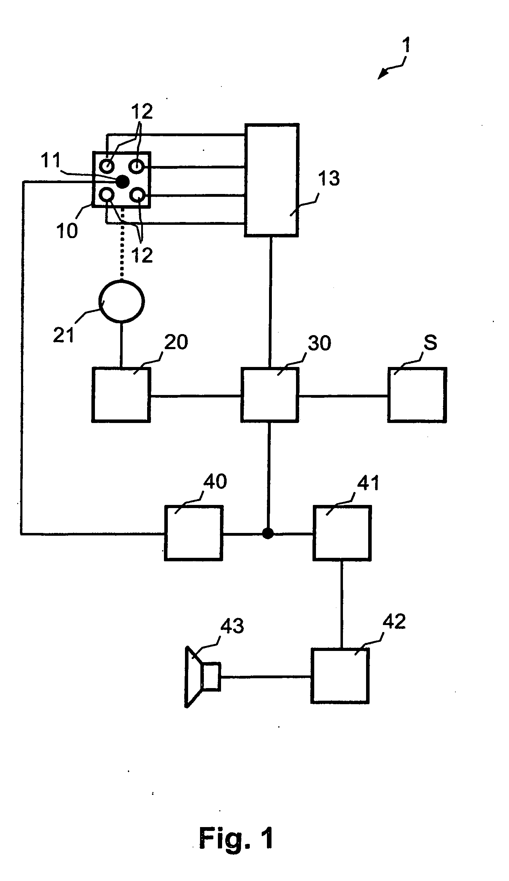

Fig. 1 zeigt ein Prinzipschaltbild einer Ausführungsform einer erfindungsgemäßen Vorrichtung 1 für die optische Aufzeichnung und/oder Wiedergabe von Daten auf optischen Speichermedien, wie CDs, DVDs usw. Die Vorrichtung 1 weist eine Abtasteinheit 10 mit einer Lichtquelle 11 auf, beispielsweise einen von einer Laserdiode gebildeten Laser, welcher von vier Photodioden 12 umgeben ist. Die Steuereinrichtung S, welche z.B. die Play-Funktion startet, liefert das Signal "S". Die Photodioden 12 detektieren Licht, das von einem nicht dargestellten optischen Speichermedium reflektiert wird, auf dem Daten in Spuren aufge-zeichnet sind oder vom Laser 11 aufgezeichnet werden, bzw. vom Laser 11 für eine Wiedergabe abgetastet werden. In der dargestellten Ausführungsform handelt es sich bei den aufgezeichneten Daten um ein digitales Audiosignal, welches von einer Signalaufbereitungsschaltung 40 aufbereitet wird. Das aufbereitete digitale Audiosignal wird von einem Digital/Analog-Wandler 41 in ein analoges Audiosignal gewandelt, welches von einem Verstärker 42 für die Wiedergabe mit einem Lautsprecher 43 verstärkt wird. Das von den vier Photo-dioden 12, die auch als Quadrantendetektor bezeichnet werden, in elektrische Ströme gewandelte reflektierte Licht des Lasers 11 wird von einer Einrichtung 13 zueinander ins Verhältnis gesetzt. Aus dem Verhältnis der Ströme der Photodioden 12 ergibt sich die Position des Lasers 11 zur abzutastenden Spur auf dem optischen Speichermedium. Das Signal der Einrichtung 13 bildet das Eingangssignal eines Reglers 30, welcher daraus ein Steuersignal ableitet, das an einen Servo 20 eines Antriebs 21, z. B. eines Linearmotors, welcher den Laser 11 bzw. die Abtasteinheit 10 bewegt und für die Abtastung der Daten positioniert. Der Regler 30 kann insbesondere von einem digitalen Signalprozessor (DSP) gebildet werden, bei dem die gewünschte Regelung per Software realisiert wird. Auch die Einrichtung 13 kann von dem DSP gebildet werden.

Durch Umwelteinflüsse kann die optische Erfassung der Daten durch den Laser 11 gestört werden. Beispielsweise kann sich die oben beschriebene Wiedergabe von Audiosignalen negativ auswirken. Besonders problematisch ist die Wiedergabe von Audiosignalen, wenn die Vorrichtung 1 und mit ihr insbesondere der Laser 11, zusammen mit dem oder den die Audiosignale wiedergebenden Lautsprechern 43 in einem Gehäuse untergebracht ist. Die dadurch verursachten Erschütterungen können dazu führen, daß der Laser 11 von der auf dem optischen Speichermedium abzutastenden Spur abgelenkt wird. Um einer derartigen Ablenkung des Lasers 11 entgegen zu wirken, können die wiederzugebenden Daten der Audiosignale in die Regelung der Positionierung des Lasers 11 durch den Regler 30 einbezogen werden. Dazu werden die von der Signalaufbereitungsschaltung 40 stammenden Audiodaten an den Regler 30 weitergegeben. Da das akustische Signal des oder der Lautsprecher 43 eine gewisse Laufzeit hat, bevor es auf die Vorrichtung 1 (CD-Laufwerk) zurückwirkt, ist es möglich, die bei dieser Rückwirkung erzeugte Störung vorherzusagen. Basierend auf dieser Vorhersage läßt sich gleichzeitig mit dem Eintreffen der durch das akustische Signal erzeugten Störung ein entsprechend entgegengerichtetes Korrektursignal vom Regler 30 erzeugen. Mit diesem Korrektursignal wird der Servo 20 beaufschlagt, um den Antrieb 21 der Abtasteinheit 10 bzw. des Lasers 11 so anzusteuern, daß sich die durch das akustische Störsignal verursachte Abweichung des Lichtstrahls des Lasers 11 von der abzutastenden Spur und die durch das Korrektursignal verursachte Bewegung des Lasers 11 kompensieren.

Wird das CD-Laufwerk 1 in einem Fahrzeug verwendet, z. B. als Bestandteil einer Car-Audio-Anlage, können Störungen auf das CD-Laufwerk 1 einwirken, wenn das Fahrzeug z. B. über ein Schlagloch fährt oder eine Autotür zugeschlagen wird. Diese anfänglich impulsartigen Störungen lassen sich nicht vorhersehen. Dennoch regen sie das CD-Laufwerk 1 zum kurzzeitigen Schwingen an. Derartige Störungen können über Schocksensoren erkannt werden und der Verlauf der dadurch erzeugten Schwingungen vorhergesagt werden. Dieses Vorhersagesignal erlaubt - wie oben beschrieben - die Generierung eines Korrektursignals, mit dessen Hilfe Positionierungsfehler des Lasers 11 bereits kurze Zeit nach Eintreffen der Störung kompensiert werden können. An Stelle von separaten Sensoren ist es möglich, andere Sensoren, die bereits im Fahrzeug integriert sind (z. B. in der Airbag Elektronik), für diese Aufgabe mitzubenutzen, was eine Kostenersparnis mit sich bringt. Andererseits kann eine Anbringung in der Nähe der Radaufhängungen eine bessere Vorhersage ermöglichen, da die Störsignale in diesem Fall unmittelbar an der Stelle der Entstehung erfasst werden.

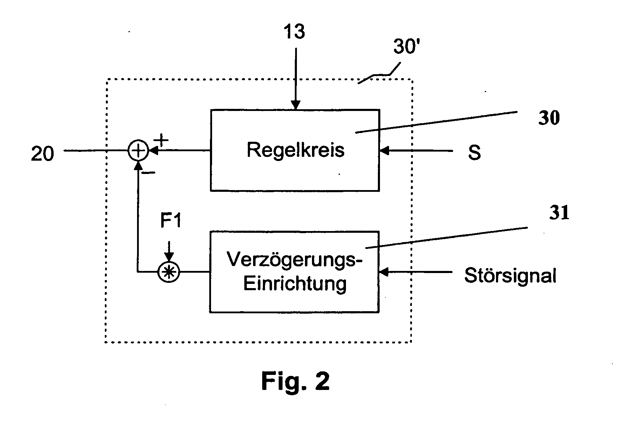

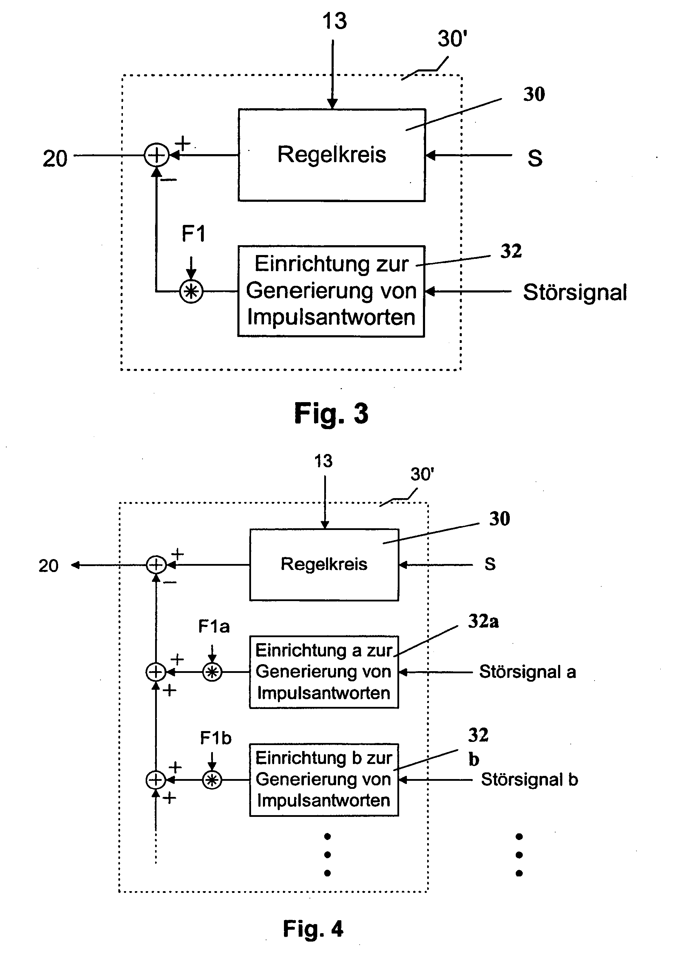

Eine besonders einfache Lösung zur Verbesserung des Verhaltens bei Störungen durch Rückkoppelungen des Audiosignals und bei durch Sensoren detektierte impulsartige Störungen ist möglich, wenn - wie oben beschrieben - der Regler 30 mittels eines DSP realisiert wird, was in Fig. 2 für ein einzelnes Servosignal dargestellt ist. Die in den DSP 20 eingespeisten Audiosignaldaten werden dabei zuerst mittels einer durch den DSP 20 gebildeten Verzögerungseinrichtung zeitlich entsprechend der räumlichen Gegebenheiten verzögert, skaliert und den Servosignalen aufaddiert. Für jedes Servosignal muss dabei eine individuelle Verzögerung und Skalierung verwendet werden. Die Vorzeichen der Skalierungsfaktoren müssen weiterhin so gewählt werden, dass das so generierte Korrektursignal der Störung entgegenwirkt. Eine weitere Verbesserung ist dadurch möglich, dass anstelle der Verzögerungseinrichtungen 31 Einrichtungen zur Generierung von Impulsantworten 32 verwendet werden, was in Fig. 3 wieder für ein einzelnes Servosignal dargestellt ist. Die Impulsantwort muss dabei so gewählt werden, dass sie der Auswirkung der Störung auf die Positionierung des Lasers möglichst gut entspricht und eine durch den Servo 20 und den Motor 21 bewirkte Veränderung (Verzögerung) kompensiert. Durch die Subtraktion dieses Signales wird dann die Störung kompensiert. In dem Fall, dass die Störung nicht früh genug bekannt ist und somit der Regler 30 bereits mit der Ausregelung dieser Störung begonnen hat, muss auch dessen Verhalten in der Impulsantwort berücksichtigt werden. Als Einrichtung zur Generierung der Impulsantwort 32 kann ein FIR-Filter (Finite Impulse Response Filter) benutzt werden, im Falle dass die Impulsantworten durch abklingende Sinusschwingungen angenähert werden können ergibt sich eine vorteilhafte Realisierung durch Verwendung von gesteuerten Oszillatoren, was später beschrieben wird. Sollten mehrere Störer vorhanden sein, z.B. zwei Lautsprecher einer Stereoanlage, vier Schocksensoren oder Kombinationen davon, so müssen für jedes dieser Störungssignale eine individuelle Einrichtung zur Generierung von Impulsantworten 32 (oder entsprechend des einfacheren Verfahrens eine Verzögerungseinrichtung) und individuelle Skalierungsfaktoren vorgesehen werden. Dies ist in Fig. 4 veranschaulicht. Eine Vereinfachung dieses Systems kann sich dadurch ergeben, dass der Skalierungsfaktor direkt in die Filterkoeffizienten mit eingerechnet wird.

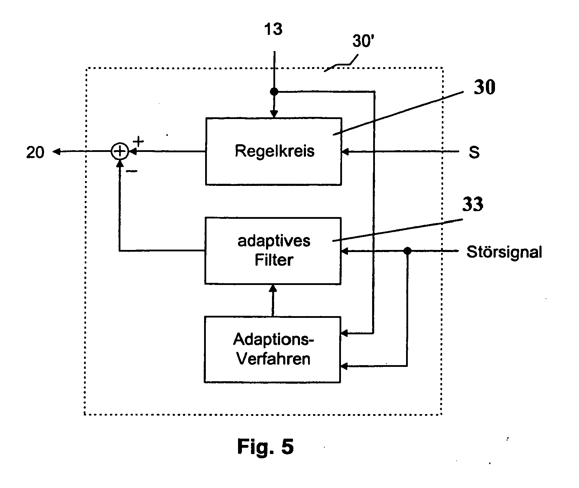

Bei Verwendung der Verzögerungseinrichtung 32a, 32b ergibt sich eine vorteilhafte Implementierung, wenn die für die einzelnen Servosignale unterschiedlich zu verzögernden Signale durch eine einzelne mit einem Digitalen Signalprozessors implementierte Verzögerungskette mit mehreren Abgriffen generiert werden. Sollte die Übertragungsfunktion nicht bekannt sein, z.B. weil die Lautsprecher frei im Raum aufgestellt werden können und nicht mit dem System direkt im Gehäuse verbunden sind, so kann anstelle der Einrichtung zur Nachbildung der Impulsantwort und der Skalierung ein adaptives Filter verwendet werden. Dies ist in Fig. 5 veranschaulicht. Das adaptive Filter 33 kann dabei wiederum als FIR-Filter ausgeführt sein. Zur Adaption kann dabei ein aus der Literatur (z. B. S. Haykin: Adaptive Filter Theory, Prentice Hall, Inc., Englewood Cliffs, New Jersey, USA, 3rd Edition, 1996) bekanntes Adaptionsverfahren wie z.B. das LMS oder RLS-Verfahren eingesetzt werden. Zur Adaption der Filterkoeffizienten benötigen diese Verfahren ein Eingangssignal, welches in diesem Fall das Signal der Störquelle, also entweder das Lautsprechersignal oder das Signal des Schockaufnehmers ist. Weiterhin wird ein Fehlersignal zur Einstellung benötigt. Im Normalfall sollten die Ausgangssignale der Matrix 13 bereits den Fehlersignalen der einzelnen Servosignale entsprechen und können damit direkt verwendet werden. Ist dies nicht der Fall, so müssen durch weitere Matrizierung entsprechende Signale gewonnen werden.

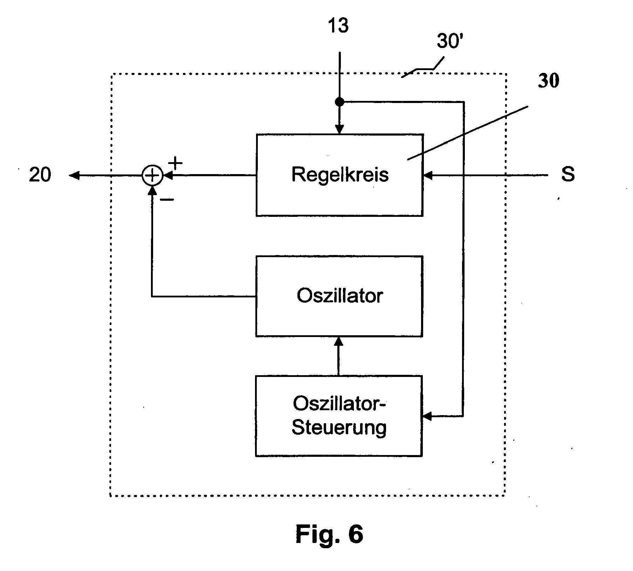

Abgesehen von den Störungen, die durch Rückkoppelungen der Audiosignale oder durch Stöße erzeugt werden, können auch Störungen dadurch erzeugt werden, dass eine CD nicht vollständig rund läuft (sowohl in vertikaler als auch in horizontaler Richtung). Diese Störungen können mit herkömmlichen Regelungen nicht vollständig kompensiert werden, da eine Korrektur erst nach Auftreten der Störung möglich ist. Da diese Störungen im Normalfall sinusförmiger Natur sind, kann ein der Störung entgegenwirkendes Korrektursignal leicht erzeugt werden, was dann zu einer vollständigen Kompensation führt. Dazu wird eine Anordnung gemäß Fig. 6 für jedes Servosignal verwendet. Die Amplitude und Phase des Korrekturoszillators werden dabei durch den Adaptionsmechanismus eingestellt. Eine Möglichkeit zur Realisierung des Adaptionsmechanismus dazu besteht darin, das zu einem Servosignal zugehörige Fehlersignal aus Matrix 13 auf ein schmalbandiges Bandpaßfilter mit einer Mittenfrequenz zu geben, die der Rotationsgeschwindigkeit der CD entspricht. Das dabei herausgefilterte Signal entspricht dann im Normalfall dem Fehleranteil, der durch eine nicht vollständig rund laufende CD erzeugt wird. Von diesem sinusförmigen Signal lässt sich direkt die Amplitude und Phasenlage der Störung entnehmen. Über die Übertragungsfunktion, die sich aus der Reihenschaltung der Module 20, 21, 10 und 13 ergibt, kann dann leicht die notwendige Phase und Amplitude des Korrekturoszillators ermittelt werden. Wird beispielsweise die Amplitude des Störsignals zu 1 mV und dessen Phasenlage zu 150 Grad ermittelt, weiterhin der Übertragungsfunktion der Strecke bei der entsprechenden Frequenz eine Dämpfung der Spannung um Faktor zwei und eine Phasendrehung von 30 Grad entnommen, dann muss der Korrekturoszillator auf eine Spannung von 2 mV und eine Phasenlage von 120 Grad eingestellt werden. Sollen auch vertikale Störungen erfasst werden, die durch verbogene CDs erzeugt werden, so müssen abgesehen von der Kompensation von Störungen mit einer der Rotationsfrequenz der CD entsprechenden Frequenz auch Kompensationsschaltungen für Frequenzen mit einem vielfachen der Rotationsfrequenz verwendet werden und die einzelnen Korrektursignale summiert werden.

Durch eine geringfügige Modifikation dieses Verfahrens lassen sich damit auch die durch Stöße verursachten mechanischen Schwingungen kompensieren. Dazu wird die Mittenfrequenz des Bandpaßfilters auf die Resonanzfrequenz der Mechanik des Laufwerkes eingestellt. Sobald eine Störung detektiert wird, wird entsprechend obiger Beschreibung eine Schwingung mit der entsprechenden Frequenz und Phasenlage erzeugt. Die Amplitude der Schwingung muss dann entsprechend der Abklingzeit der mechanischen Schwingung mit der Zeit verringert werden. Da mehrere Störungen nacheinander eintreffen können, müssen die einzelnen korrigierenden Schwingungen überlagert werden. Da alle Schwingungen die gleiche Abklingzeit und Frequenz aufweisen, reicht ein Oszillator zur Generierung des Korrektursignales aus, die Amplitude und Phasenlage des Oszillators wird dann entsprechend der Amplitude und Phasenlage der überlagerten Schwingungen eingestellt. Dabei ist es z. B. auch möglich, dass sich zwei aufeinanderfolgende Störungen gegenseitig kompensieren, beim Eintreffen der zweiten Störung muss dann die Amplitude des Korrekturoszillators auf Null gesetzt werden. Obwohl dieses Verfahren gegenüber dem zuerst beschriebenen Verfahren den Nachteil besitzt, erst dann korrigierend eingreifen zu können, wenn schon eine fehlerhafte Auslenkung des Lasers aufgetreten ist, hat dieses Verfahren den Vorteil, wesentlich weniger Rechenaufwand zu verursachen. Auch bei diesem Verfahren sind zur Detektion der Schwingung abgesehen von Bandpaßfiltern auch andere Verfahren einsetzbar, beispielsweise kann die Amplitude und Phasenlage der entsprechenden Schwingung auch einer Spektraldarstellung des Signales entnommen werden, welche beispielsweise mittels einer Diskreten Fourier Transformation gewonnen werden kann. Prinzipiell kann dazu jedes aus der Standardliteratur bekanntes Verfahren zur Detektion von Sinustönen verwendet werden.

Wie bereits oben im Zusammenhang mit Fig. 1 beschrieben, können der Regler 30 und die Einrichtung 13 mittels eines DSP mit entsprechender Software realisiert werden. Gleiches gilt auch für den in den Fig. 2 bis 6 dargestellten Regler 30' bzw. dessen Bestandteile.

Verfahren für optische Datenerfassung von optischen Speichermedien durch Aufzeichnung und/oder Wiedergabe von Daten, bei dem zur Aufzeichnung und/oder Wiedergabe von Daten ein Lichtstrahl die optischen Speichermedien entlang von Spuren abtastet, wobei der Lichtstrahl entlang des Verlaufs der abzutastenden Spuren geführt wird, und Ereignisse erfasst werden, welche geeignet sind den Lichtstrahl vom Verlauf der abzutastenden Spuren abzulenken, die zu erwartende Ablenkung des Lichtstrahl vom Verlauf der abzutastenden Spuren ermittelt wird, die von den erfassten Ereignissen verursacht wird, eine die ermittelte Ablenkung ausgleichende Korrektur bestimmt wird, und die Führung des Lichtstrahls entsprechend der bestimmten Korrektur verändert wird, dadurch gekennzeichnet, dass diese Ereignisse von den wiederzugebenden Daten, welche Audiosignale beinhalten, verursacht werden, und die zu erwartende Ablenkung sowie die zugehörige Korrektur aus den wiederzugebenden Daten bestimmt werden.
Verfahren, dadurch gekennzeichnet, dass die Ereignisse von impulsartigen Erschütterungen verursacht werden, und dass die zu erwartende Ablenkung sowie die zugehörige Korrektur aus durch die impulsartigen Erschütterungen erzeugten periodischen Ereignissen bestimmt werden.
Verfahren, dadurch gekennzeichnet, dass die Ereignisse von periodischen Störungen verursacht werden, und dass die zu erwartende Ablenkung sowie die zugehörige Korrektur aus den periodischen Störungen bestimmt werden.

Vorrichtung für optische Datenerfassung von optischen Speichermedien durch Aufzeichnung und/oder Wiedergabe von Daten, mit einer Lichtquelle 11 für die Aufzeichnung und/oder Wiedergabe von Daten, welche mit einem Lichtstrahl die optischen Speichermedien entlang von Spuren abtastet, einem Antrieb 21, welcher den Lichtstrahl der Lichtquelle 11 entlang des Verlaufs der abzutastenden Spuren führt, einem Detektor 12, 13, welcher die Führung des Lichtstrahls entlang des Verlaufs der abzutastenden Spuren überprüft, und einem Regler 30 sowie einem Servo 20, welche den Antrieb 21 steuern, und an den Detektor 12, 13 angeschlossen sind, der Regler 30 Ereignisse erfasst, welche geeignet sind den Lichtstrahl vom Verlauf der abzutastenden Spuren abzulenken, der Regler 30 die zu erwartende Ablenkung des Lichtstrahls vom Verlauf der abzutastenden Spuren ermittelt, die von den erfassten Ereignissen verursacht werden, der Regler 30 eine die ermittelte Ablenkung ausgleichende Korrektur bestimmt, und der Regler 30 über den Servo 20 den Antrieb 21 beeinflusst, um die Führung des Lichtstrahls entsprechend der bestimmten Korrektur zu verändern, dadurch gekennzeichnet, dass eine Signalaufbereitungschaltung 40 die von den optischen Speichermedien wiederzugebende Daten, welche Audiosignale beinhalten, an den Regler 30 weiterleitet, der daraus eine ausgleichende Korrektur bestimmt.
Vorrichtung, dadurch gekennzeichnet, dass der Regler 30 eine Einrichtung zur zeitlichen Verzögerung aufweist, und die ausgleichende Korrektur aus den durch die Einrichtung zeitlich verzögerten wiederzugebenden Daten bestimmt und/oder die zeitliche Verzögerung an die räumlichen Gegebenheiten angepasst ist und/oder der Regler 30 die zeitliche Verzögerung skaliert und zu den Servosignalen aufaddiert und/oder für jedes Servosignal eine individuelle Verzögerung und Skalierung der einzelnen Störsignale erfolgt und/oder der Regler 30 eine Einrichtungen zur Generierung von Impulsantworten 32 aufweist, wobei die Impulsantwort derart gewählt ist, dass sie der Auswirkung der Störung auf die Positionierung des Lasers möglichst annäherungsweise entspricht.

Vorrichtung, dadurch gekennzeichnet, dass der Regler 30 eine durch den Servo 20 und den Motor 21 bewirkte Veränderung bzw. Verzögerung kompensiert und/oder der Regler 30 durch die Subtraktion der Impulsantwort vom Signal die Störung kompensiert und/oder bei der Impulsantwort das zeitliche Ansprechen des Reglers 30 berücksichtigt ist.
Vorrichtung, dadurch gekennzeichnet, dass die Einrichtung zur Generierung der Impulsantwort 32 ein FIR-Filter (Finite Impulse Response Filter) ist und/oder die Einrichtung zur Generierung der Impulsantwort 32 von gesteuerten Oszillatoren gebildet ist und die Einstellung der Oszillatoramplitude und -Phase mikroprozessorgesteuert erfolgt oder die Einrichtung zur Generierung der Impulsantwort 32 ein adaptives Filter ist
Vorrichtung, dadurch gekennzeichnet, dass der Regler 30 von einem digitalen Signalprozessor gebildet wird.
Vorrichtung, dadurch gekennzeichnet, dass die Vorrichtung ein CD-, DVD- oder ähnliches Laufwerk mit optischer Signalaufbereitung ist.
Vorrichtung, dadurch gekennzeichnet, dass die Vorrichtung für den Einbau in ein Fahrzeug vorbereitet ist.
Vorrichtung, dadurch gekennzeichnet, dass mindestens ein Sensor S vorgesehen ist, welcher die Ereignisse aufnimmt, welche geeignet sind den Lichtstrahl vom Verlauf der abzutastenden Spuren abzulenken und/oder der Sensor S Erschütterungen aufnimmt und/oder der Sensor S Bestandteil eines Airbags ist.
Vorrichtung, dadurch gekennzeichnet, dass die von Sensoren detektierten Stöße an den Regler 30 weitergeleitet werden, der daraus eine ausgleichende Korrektur bestimmt oder für jede Kombination aus Störsignal und Servosignal eine eigene Einrichtung zur Generierung von Impulsantworten verwendet wird und/oder das Korrektursignal für ein Servosignal aus der Überlagerung der zugehörigen Einrichtungen zur Generierung von Impulsantworten der verschiedenen Störsignale erzeugt wird.

## Patentansprüche

1. Vorrichtung zur Aufzeichnung und/oder Wiedergabe von Daten auf einem optischen Speichermedium, mittels einer Abtasteinheit (10), bestehend aus einem Laser (11) und einer diesen umgebenden Anordnung von Photodioden (12), wobei eine Steuereinheit, bestehend aus einem Servo (20) und einem Antrieb (21), die Abtasteinheit (10) entlang von Spuren auf dem optischen Speichermedium führt und die Photodioden (12) der Abtasteinheit (10) die vom optischen Speichermedium reflektierten Lasersignale erfassen und diese erfassten Signale in elektrische Ströme wandeln, mittels derer die Steuereinheit die Führung der Abtasteinheit (10) entlang der Spuren auf dem optischen Speichermedium vornimmt, wobei ein Regler (30) vorgesehen ist, der Daten für die Steuereinheit bereitstellt, welche diese zur Führung der Abtasteinheit (10) nutzt, wobei der Regler (30) Ereignisse erfasst, welche geeignet sind den Laser (11) der Abtasteinheit (10) vom Verlauf der abzutastenden Spuren auf dem optischen Speichermedium abzulenken, der Regler (30) die zu erwartende Ablenkung des Lasers (11) vom Verlauf der abzutastenden Spuren auf dem optischen Speichermedium ermittelt, die von den erfassten Ereignissen verursacht werden, der Regler (30) eine die ermittelte Ablenkung ausgleichende Korrektur bestimmt, und der Regler (30) den Servo (20) der Steuereinheit und somit den Antrieb (21) der Steuereinheit beeinflusst, um die Führung der Abtasteinheit (10) entsprechend der bestimmten Korrektur zu regeln, wobei die Vorrichtung in einer Anordnung zur Wiedergabe von auf dem optischen Speichermedium gespeicherten Audiodaten angeordnet ist, bei welcher über Lautsprecher (43) diese Audiodaten in Form von Audiosignalen wiedergegeben werden, wodurch die wiedergegebenen Audiodaten akustisch oder mechanisch auf die Vorrichtung rückgekoppelt sind und die Steuereinheit die hierdurch hervorgerufenen Ablenkungen des Lasers (11) der Abtasteinheit (10) korrigiert, **dadurch gekennzeichnet, dass** der Regler (30) aus den ihm von einer Signalaufbereitungsschaltung (40) zugeleiteten wiederzugebenden Audiodaten Korrektursignale ermittelt, welche der Regler (30) den Signalen zur Steuerung des Servo (20) der Steuereinheit aufaddiert und somit den hervorgerufenen Ablenkungen entgegenwirkt, wobei der Regler (30) eine Einrichtung (31) zur zeitlichen Verzögerung aufweist, welche die Signale zur Steuerung des Servo (20) verzögert und die ausgleichende Korrektur aus den durch die Einrichtung (31) zeitlich verzögerten wiederzugebenden Audiodaten bestimmt, wobei die Einrichtung (31) auf die räumlichen Gegebenheiten der Anordnung zur Wiedergabe von auf dem optischen Speichermedium gespeicherten Audiodaten anpassbar ist oder der Regler (30) eine Einrichtung (32) zur Erzeugung einer Impulsantwort aufweist, wobei die Impulsantwort derart gewählt ist, dass sie der vom Regler (30) ermittelten von den wiedergegebenen, akustisch oder mechanisch auf die Vorrichtung rückgekoppelt, Audiodaten hervorgerufenen Ablenkungen des Lasers (11) der Abtasteinheit (10) nahezu entspricht.

2. Vorrichtung nach Anspruch 1,
**dadurch gekennzeichnet, dass**
der Regler (30) die Audiodaten verzögert, skaliert und zu den Servosignalen aufaddiert, wobei für jedes Servosignal eine individuelle Verzögerung und Skalierung der Audiodaten erfolgt.

3. Vorrichtung nach Anspruch 1,
**dadurch gekennzeichnet, dass**
der Regler (30) durch eine Subtraktion der Impulsantwort vom Regelsignal die von den akustisch oder mechanisch auf die Vorrichtung rückgekoppelten Audiodaten hervorgerufenen Ablenkungen des Lasers (11) der Abtasteinheit (10) kompensiert und bei der Impulsantwort das zeitliche Ansprechen des Reglers (30) berücksichtigt ist.

4. Vorrichtung nach einem der Ansprüche 1 oder 3,
**dadurch gekennzeichnet, dass**
die Einrichtung (32) zur Generierung der Impulsantwort ein FIR-Filter (Finite Impulse Response Filter) ist.

5. Vorrichtung nach einem der Ansprüche 1 oder 3,
**dadurch gekennzeichnet, dass**
die Einrichtung (32) zur Generierung der Impulsantwort von gesteuerten Oszillatoren gebildet ist und die Einstellung der Oszillatoramplitude und -phase mikroprozessorgesteuert erfolgt oder die Einrichtung zur Generierung der Impulsantwort (32) ein adaptives Filter ist

6. Vorrichtung nach einem der Ansprüche 1 bis 5,
**dadurch gekennzeichnet, dass**
mindestens ein Sensor (S) vorgesehen ist, welcher die Ereignisse aufnimmt, welche geeignet sind den Lichtstrahl vom Verlauf der abzutastenden Spuren abzulenken und/oder der Sensor (S) Erschütterungen aufnimmt und der Sensor (S) Bestandteil eines Airbags ist.

7. Vorrichtung nach Anspruch 6,
**dadurch gekennzeichnet, dass**
der Sensor (S) detektiert Ereignisse an den Regler (30) weitergeleitet werden, der daraus eine ausgleichende Korrektur bestimmt oder für jede Kombination aus Ereignis, welches geeignet ist den Laser (11) vom Verlauf der abzutastenden Spuren abzulenken, und Servosignal, eine eigene Einrichtung zur Generierung von Impulsantworten verwendet wird und/oder das Korrektursignal für ein Servosignal aus der Überlagerung der zugehörigen Einrichtungen zur Generierung von Impulsantworten der verschiedenen Ereignisse, welche geeignet sind, den Laser (11) vom Verlauf der abzutastenden Spuren abzulenken, erzeugt wird.

## Claims

1. Apparatus for recording and/or reproduction of data on an optical memory medium, by means of a scanner (10), consisting of a laser (11) and surrounding this an array of photodiodes (12); a control unit consisting of a servo (20) and a drive mechanism (21) guiding the scanner (10) along tracks on the optical memory medium and the photodiodes (12) of the scanner (10) recording the laser signals reflected by the optical memory medium and converting these recorded signals into electrical currents, by means of which the control unit undertakes the guidance of the scanner (10) along the tracks on the optical memory medium, a controller (30) being provided which supplies data for the control unit, which uses this for guiding the scanner (10), the controller (30) recording events which are suitable for deflecting the laser (11) of the scanner (10) from the course of the tracks to be scanned on the optical memory medium, the controller (30) determining the expected deflection of the laser (11) from the course of the tracks to be scanned on the optical memory medium, as caused by the recorded events, the controller (30) deciding a correction balancing out the determined deflection, and the controller (30) influencing the servo (20) of the control unit and hence the drive mechanism (21) of the control unit in order to regulate the guidance of the scanner (10) according to the decided correction, the apparatus being disposed in an arrangement for reproduction of audio data stored on the optical memory medium, in which arrangement this audio data is reproduced over loudspeakers (43) in the form of audio signals, by which the reproduced audio data is acoustically or mechanically fed back to the apparatus and the control unit corrects the hereby caused deflections of the laser (11) of the scanner (10), **characterized in that** the controller (30) determines correction signals from the audio data to be reproduced which was forwarded to it by the signal conditioning circuit (40), the controller (30) adding these correction signals to the signals for controlling the servo (20) of the control unit, and thus counteracting the deflections caused, where the controller (30) has a facility (31) for time delay, which delays the signals for controlling the servo (20) and decides the balancing correction from the audio data to be reproduced which is time-delayed by the facility (31), the facility (31) being adaptable to the spatial conditions of the arrangement for reproduction of audio data stored on the optical memory medium or the controller (30) having a facility (32) for generating an impulse response, the impulse response being chosen such that it virtually corresponds to the deflections of the laser (11) of the scanner (10) as determined by the controller (30) and caused by the reproduced audio data which is fed back acoustically or mechanically to the apparatus.

2. Apparatus according to Claim 1, **characterized in that** the controller (30) delays the audio data, scales it and adds it to the servo signals, an individual delay and scaling of the audio data taking place for each servo signal.

3. Apparatus according to Claim 1, **characterized in that** by a subtraction of the impulse response from the control signal, the controller (30) compensates the deflections of the laser (11) of the scanner (10) caused by the audio data fed back acoustically or mechanically to the apparatus; and the time response of the controller (30) is taken into account in the impulse response.

4. Apparatus according to one of Claims 1 or 3,
**characterized in that**
The facility (32) for generating the impulse response is an FIR filter (Finite Impulse Response Filter).

5. Apparatus according to one of Claims 1 or 3,
**characterized in that**
the facility (32) for generating the impulse response is formed from controlled oscillators and the setting of the oscillator amplitude and phase is controlled by microprocessor or the facility for generating the impulse response (32) is an adaptive filter.

6. Apparatus according to one of Claims 1 to 5,
**characterized in that**
at least one sensor (S) is provided, which picks up the events which are suitable for deflecting the light beam from the course of the tracks to be scanned and/or the sensor (S) picks up jarring and the sensor (S) is part of an airbag.

7. Apparatus according to Claim 6, **characterized in that** the sensor (S) detected events are forwarded to the controller (30), which thereby decides a balancing correction or for each combination of event which is suitable for deflecting the laser (11) from the course of the tracks to be scanned, and servo signal, a separate facility for generating impulse responses is used and/or the correction signal for a servo signal is generated from the overlaying of the associated facilities for the generation of impulse responses for the various events which are suitable for deflecting the laser (11) from the course of the tracks to be scanned.

## Revendications

1. Dispositif pour enregistrer et/ou reproduire des données sur un support mémoire optique, au moyen d'une unité d'échantillonnage (10), constituée d'un laser (11) et d'un agencement de photodiodes (12) entourant celui-ci, dans lequel une unité de commande, constituée d'un système d'asservissement (20) et d'un entraînement (21), l'unité d'échantillonnage (10) conduit le long de pistes sur le support mémoire optique et les photodiodes (12) de l'unité d'échantillonnage (10), qui acquièrent les signaux laser réfléchis par le support mémoire optique et convertissent ces signaux acquis en courants électriques, grâce auxquels l'unité de commande effectue le guidage de l'unité d'échantillonnage (10) le long des pistes sur le support mémoire optique, dans lequel un régulateur (30) est prévu, qui délivre les données pour l'unité de commande, qui utilise celles-ci pour le guidage de l'unité d'échantillonnage (10), dans lequel le régulateur (30) acquit des événements, qui sont appropriés pour dévier le laser (11) de l'unité d'échantillonnage (10) à partir du tracé des pistes à échantillonner sur le support mémoire optique, le régulateur (30) détecte la déviation attendue du laser (11) à partir du tracé des pistes à échantillonner sur le support mémoire optique, qui est provoquée par les événements acquis, le régulateur (30) détermine une correction compensant la déviation déterminée, et le régulateur (30) influence le système d'asservissement (20) de l'unité de commande ainsi que l'entraînement (21) de l'unité de commande, afin de réguler le guidage de l'unité d'échantillonnage (10) conformément à la correction déterminée, dans lequel le dispositif est disposé dans un agencement pour reproduire les données audio mémorisées sur le support mémoire optique, dans lequel ces données audio sous la forme de signaux audio sont reproduites par l'intermédiaire de haut-parleurs (43), moyennant quoi les données audio reproduites sont réinjectées acoustiquement ou mécaniquement dans le dispositif et l'unité de commande corrige les déviations ainsi provoquées du laser (11) de l'unité d'échantillonnage (10), **caractérisé en ce que** le régulateur (30) détecte, à partir des données audio reproduites délivrées par un circuit de traitement de signaux (40), des signaux de correction, que le régulateur (30) ajoute aux signaux pour commander le système d'asservissement (20) de l'unité de commande et ainsi s'oppose aux déviations provoquées,
dans lequel le régulateur (30) présente un dispositif (31) pour un ralentissement temporel, qui ralentit les signaux pour commander le système d'asservissement (20) et détermine la correction de compensation à partir des données audio reproduites ralenties dans le temps par le dispositif (31), dans lequel le dispositif (31) peut être adapté à l'architecture spatiale de l'agencement pour reproduire les données audio mémorisées sur le support mémoire optique ou le régulateur (30) possède un dispositif (32) pour générer une réponse d'impulsion, dans lequel la réponse d'impulsion est sélectionnée de sorte qu'elle correspond presque aux déviations du laser (11) de l'unité d'échantillonnage (10) détectées par le régulateur (30) et provoquées par les données audio reproduites réinjectées acoustiquement ou mécaniquement au dispositif.

2. Dispositif selon la revendication 1, **caractérisé en ce que** le régulateur (30) ralentit les données audio, les cadre et les ajoute aux signaux d'asservissement, dans lequel un ralentissement individuel et un cadrage des données audio sont effectués pour chaque signal d'asservissement.

3. Dispositif selon la revendication 1, **caractérisé en ce que** le régulateur (30) compense par une soustraction de la réponse d'impulsion du signal de réglage les déviations du laser (11) de l'unité d'échantillonnage (10) provoquées les données audio réinjectées acoustiquement ou mécaniquement au dispositif et dans le cas de la réponse d'impulsion, le déclenchement temporel du régulateur (30) est pris en considération.

4. Dispositif selon l'une des revendications 1 à 3, **caractérisé en ce que** le dispositif (32) pour générer la réponse d'impulsion est un filtre FIR (filtre de réponse finie à une impulsion).

5. Dispositif selon l'une des revendications 1 à 3, **caractérisé en ce que** le dispositif (32) pour générer la réponse d'impulsion est formé par des oscillateurs commandés et le réglage de l'amplitude et de la phase de l'oscillateur est commandé par microprocesseur et le dispositif pour générer la réponse d'impulsion (32) est un filtre adaptatif.

6. Dispositif selon l'une des revendications 1 à 5, **caractérisé en ce qu'**au moins un capteur (S) est prévu, qui reçoit les événements, appropriés pour dévier le rayon lumineux à partir du tracé des pistes à échantillonner et/ou le capteur (S) reçoit des secousses et le capteur (S) est un composant d'un airbag.

7. Dispositif selon la revendication 6, **caractérisé en ce que** le capteur (S) détecte des événements qui sont transmis au régulateur (30) qui détermine à partir de ceux-ci une correction de compensation ou pour chaque combinaison à partir d'un événement, qui est approprié pour dévier le laser (11) à partir du tracé des pistes à échantillonner, et un signal d'asservissement, un dispositif spécifique est utilisé pour générer des réponses d'impulsion et/ou le signal de correction est généré pour un signal d'asservissement à partir du recouvrement des dispositifs associés pour générer des réponses d'impulsion des différents événements, appropriés pour dévier le laser (11) à partir du tracé des pistes à échantillonner.
